# EUROPÄISCHE PATENTSCHRIFT

(11) **EP 0 950 463 B1**
(45) Veröffentlichungstag und Bekanntmachung des Hinweises auf die Patenterteilung: **23.01.2002**
(21) Anmeldenummer: 98810252.1
(22) Anmeldetag: 23.03.1998
(51) Int. Cl.: B23K 26/10, F01D 5/18

(54) **Nichtkreisförmige Kühlbohrung und Verfahren zur Herstellung derselben**
Non-circular cooling hole and method of manufacturing the same
Perforation non-circulaire de refroidissement et procédé pour sa fabrication

(43) Veröffentlichungstag der Anmeldung: 20.10.1999
(73) Patentinhaber: Alstom, 75116 Paris (FR)
(72) Erfinder: Blöchlinger, Michael, 5000 Aarau (CH); Luketic, Ivan, 5417 Untersiggenthal (CH); Semmler, Klaus, 79787 Lauchringen (DE); Wilfert, Günter, Dr., 79790 Küssaberg (DE)
(74) Vertreter: Liebe, Rainer

(56) Entgegenhaltungen:
- US-A- 5 609 779
- US-A- 5 683 600

## Beschreibung

Die Erfindung betrifft ein Verfahren zur Herstellung einer nichtkreisförmigen Kühlbohrung, welche insbesondere zur Filmkühlung einer Wand in einer Heissgasumgebung dienen soll.

### Stand der Technik

Zur Steigerung der Leistung und des Wirkungsgrades werden bei heutigen Gasturbinenanlagen immer höhere Turbineneintrittstemperaturen angewendet. Um die Turbinenschaufeln vor den erhöhten Heissgastemperaturen zu schützen, müssen diese intensiv gekühlt werden. Bei entsprechend hohen Eintrittstemperaturen reicht eine rein konvektive Kühlung nicht mehr aus. Es wird daher vielfach die Methode der Filmkühlung eingesetzt. Dabei werden die Turbinenschaufeln durch einen Kühlfilm vor dem Heissgas geschützt. In die Schaufeln werden dazu Ausnehmungen, beispielsweise Bohrungen, eingebracht, durch die die Kühlluft ausgeblasen wird.

Um einen möglichst hohen Kühleffekt zu erreichen, muß die ausgeblasene Kühlluft möglichst schnell umgelenkt werden und schützend an der Profiloberfläche entlang strömen. Um auch die zwischen den Bohrungen liegenden Gebiete zu schützen, ist zudem eine schnelle seitliche Ausbreitung der Kühlluft erforderlich. Dies kann dadurch erreicht werden, daß die Kühlluftbohrungen einen Diffusor aufweisen, der aufgrund der seitlichen Aufweitung eine breitere Überdeckung der Oberfläche ermöglicht. Zur weiteren Verbesserung des Mischungsverhaltens werden Diffusorgeometrien verwendet, bei denen die Bohrung nicht nur seitlich, sondern zusätzlich auf der stromabwärts liegenden Seite der Bohrung aufgeweitet wird.

Beispielsweise beschreibt die Druckschrift EP-B-228 338 eine gekühlte Wand mit einem Kühlmittelkanal, dessen Diffusorabschnitt sich zum Kühlmittelauslaß hin seitlich aufweitet und dessen stromabwärtige ebene Oberfläche von der Achse weg divergiert.

Die Ausblaseraten bei diesen Diffusorgeometrien sind klein, so daß die Gefahr, daß die Kühlluft durch die Strömungsgrenzschicht hindurchtritt gering ist. Daher kann der Kühlwirkungsgrad gegenüber einer zylindrischen Bohrung erheblich gesteigert werden.

Die Genauigkeit, mit der die mit Kühllöchern zu versehenden Werkstücke hergestellt werden müssen, stellt einen bedeutenden Kostenfaktor dar. Große Wandtolerenzen von bis zu 10% oder sogar von bis zu 20% erlauben, die Bauteile kostengünstig herzustellen. Andererseits führen die Schwankungen in der Wanddicke zu Variationen im Öffnungsverhältnis der Kühlbohrungen in Abhängigkeit von der Wandstärke. Die damit einhergehende ungleichmäßige Filmkühleffektivität führt entweder zur kostspieligen Überauslegung auf die schwächsten Punkte, oder zum Auftreten von überhitzten Stellen auf der Wandoberfläche, was die Lebensdauer des Bauteils drastisch reduziert.

Die Herstellung solcher Löcher mit einem Erosionsverfahren, wie etwa in der Druckschrift US-A-4,197,443 beschrieben, hat neben den hohen Herstellungskosten den Nachteil, daß die Verwendung eines Erodierrechens bereits bei kleinen Oberflächentoleranzen zu stark unterschiedlichen Öffnungsverhältnissen der einzelnen Kühllöcher führt. Darüber hinaus kann das Erosionsverfahren nicht bei keramisch beschichteten Oberflächen eingesetzt werden, da diese elektrisch isolieren. Die Kühllöcher müssen in diesem Fall vor der Beschichtung hergestellt werden. Die nachfolgende Beschichtung legt in der Regel einen Teil der Diffusoröffnung zu, wodurch die Kühleigenschaften der Löcher beeinflusst werden. Es wird dann notwendig, in einem weiteren Verfahrensschritt das blockierende Material zu entfernen. Beispielsweise beschreibt die Druckschrift US-A-5,216,808 ein Verfahren zum Herstellen oder Reparieren eines Gasturbinenbauteils. Dabei wird nach Aufbringen einer Schutzschicht auf das Bauteil ein UV-Laserstrahl auf die Position eines Filmkühllochs gerichtet, um blockierendes Beschichtungsmaterial athermisch zu entfernen.

Beim Laserbohren von Turbinenschaufeln werden überwiegend zwei Bohrverfahren eingesetzt. Beim Percussionsbohren wird ein Loch mit relativ zum Werkstück feststehender Strahlachse mit einer Reihe von Laserpulsen auf den Solldurchmesser aufgebohrt. Mit diesem Verfahren lassen sich jedoch lediglich zylindrische Löcher leicht herstellen.
Beim Trepannierbohrverfahren wird ein fein fokussierter Laserstrahl relativ zum Werkstück bewegt und so das Loch ausgeschnitten. Bei der Herstellung von Kühllöchern mit Diffusor mit einem Laserbohrverfahren tritt das Problem auf, dass mit zunehmender Wandstärke auch die Länge des zylindrischen Lufteinlaufkanals zunimmt. Dieser Einlaufkanal wird beim Ausschneiden des sich aufweitenden Diffusors durch den Laserstrahl verletzt. Die entstehenden scharfkantigen Verletzungen stellen ein schwerwiegendes Festigkeitsproblem dar. Darüber hinaus verändert sich die Einlassöffnung und somit der Durchfluss durch die Kühlbohrung. Aus diesem Grund kann das Trepannierverfahren für Kühllöcher mit Diffusor nur bei kleinen Wandstärken eingesetzt werden.

Die Druckschrift US-A-5,683,600 beschreibt ein Verfahren zur Herstellung kreisförmiger Kühllöchern mit sich diffusorartig erweiterndem, nichtkreisförmigem Austrittsquerschnitt in Gasturbinenkomponenten. Ein fokussierter Laserstrahl von nichtkreisförmigem Querschnitt wird unter einem spitzen Einfallwinkel auf die Bauteilwand gerichtet, um zunächst die Diffusoröffnung auszubilden. Anschliessend wird die Herstellung des zylindrischen Eingangsbereichs des Kühllochs durch den ausgebildeten Diffusor hindurch fortgesetzt bis zur kompletten Fertigstellung der Durchgangsbohrung. Da keine Relativbewegung zwischen Laserstrahl und Bauteil stattfindet, werden Grösse und Form der Diffusoröffnung durch Querschnittsform und Einfallwinkel des Laserstahls sowie die Anordnung des Brennpunkts bestimmt. Hierbei ist nachteilig, dass die Bereitstellung eines nichtkreisförmigen Laserstrahls einen zusätzlichen apparativen Aufwand erfordert und die Vielfalt und Flexibilität der möglichen Querschnittsformen einschränkt.

Die Druckschrift US-A-5,609,779 wird als nächesliegender Stand der Technik angesehen und offenbart ein Verfahren zum Ausbilden einer Öffnung in einer metallischen Bauteilwand, wobei die Öffnung einen sich aufweitenden Diffusor aufweist. Der nichtkreisförmige Diffusor wird hergestellt, indem ein Nd:YAG-Laserstrahl innerhalb weniger Laserpulse von der Mittellinie der Öffnung beschleunigt zur Kante des Diffusors geführt wird. Pulsrate und Leistung des Lasers sind so gewählt, dass das Metall durch den Laserstrahl verdampft. Nachteilig ist, dass die entstehenden Diffusoren bei einem solchen Verfahren sehr unterschiedlich ausfallen. Eine gleichmässige Effektivität der Kühlöffnungen ist jedoch wegen der engen Auslegung der Bauteile in modernen Gasturbinen unerlässlich.

### Darstellung der Erfindung

Der Erfindung liegt die Aufgabe zugrunde, ein Verfahren bereitzustellen, mit dem eine Kühlbohrung in einer Wand kostengünstig, genau und hochflexibel ausgebildet werden kann. Insbesondere soll das Verfahren es erlauben, die Kühlbohrung unabhängig von den Herstellungstoleranzen der Wandstärke auszubilden und soll für alle Wandstärken geeignet sein.

Diese Aufgabe wird durch ein Verfahren zum Ausbilden einer Kühlbohrung nach Anspruch 1 gelöst. Vorteilhafte Ausführungsformen geben die abhängigen Ansprüche wieder.

Das erfindungsgemässe Verfahren zum Ausbilden einer Kühlbohrung in einer Wand eines Werkstücks, wobei die Kühlbohrung in Strömungsreihenfolge einen Zuführabschnitt mit konstanter Querschnittsfläche und einen sich zu einem Auslass an einer äusseren Oberfläche der Wand hin aufweitenden Diffusorabschnitt aufweist, umfasst folgende Verfahrensschritte:
A) Auswählen von Form und Grösse der Querschnittsfläche und einer Achse des Zuführabschnitts;
B) Auswählen der Tiefe des Diffusorabschnitts und der Form und Grösse seiner Austrittsfläche an dem Auslass;
C) Erzeugen einer Durchgangsbohrung mit einer Querschnittsfläche, die innerhalb der im Schritt A ausgewählten Querschnittsfläche des Zuführabschnitts liegt;
D) Ausschneiden des Diffusorabschnitts mit einem Strahlbohrverfahren, wobei der Bohrstrahl relativ zum Werkstück entlang der auszuschneidenden Kontur so geführt wird, dass er im Bereich des Zuführabschnitts im wesentlichen innerhalb der in Schritt A ausgewählten Querschnittsfläche bleibt.

Die Erfindung beruht demnach auf dem Gedanken, den Diffusorabschnitt einer Kühlbohrung so mit einem Bohrstrahl auszuschneiden, dass der Zuführabschnitt nicht oder nur wenig verletzt wird, wodurch die Kühlbohrung eine hohe Festigkeit erhält. Die Strömung des Kühlmittels durch die Kühlbohrung im Betrieb legt eine Strömungsrichtung in der Kühlbohrung fest. Form und Größe der Querschnittsfläche des Zuführabschnitt bestimmen die durchströmende Menge des Kühlmittels. Das erfindungsgemäße Verfahren bietet den Vorteil, daß die Kühlbohrung durch die Verwendung eines Bohrstrahlverfahrens, insbesondere eines Laserbohrverfahrens, genau und flexibel geschnitten werden kann. Das Verfahren ist für unbeschichtete wie für metallisch oder keramisch beschichtete Bauteile geeignet. Im letzeren Fall können die Kühlbohrungen nach der Beschichtung in einem einzigen Arbeitsgang hergestellt werden. Es entfällt die Notwendigkeit, die Löcher vor der Beschichtung zu bohren und nach der Beschichtung die blockierten Öffnungen wieder freizulegen. Verletzungen des Zuführabschnitts werden dadurch minimiert, daß der Bohrstrahl beim Ausschneiden des Diffusorabschnitts im wesentlichen innerhalb der Querschnittsfläche des Zuführabschnitts bleibt.

Bevorzugt wird als Strahlbohrverfahren ein Laserbohrverfahren, insbesondere ein gepulstes Laserbohrverfahren verwendet. Bevorzugt kommt dabei ein gepulster Nd:YAG-Laser oder ein gepulster CO₂-Laser zum Einsatz. Jedoch liegt auch die Verwendung anderer Bohrstrahlen, etwa eines Wasserstrahls im Rahmen der Erfindung.

Vorzugsweise wird in Schritt D der Diffusorabschnitt gerade ausgeschnitten, so daß die Begrenzungsflächen des Diffusorabschnitts in Strömungsrichtung der Kühlbohrung keine Krümmung aufweisen. Die Festigkeit der Kühlbohrung kann weiter erhöht werden, indem in einem weiteren Schritt E der Zuführabschnitt auf Endkontur ausgeschnitten wird. Ein solcher Schritte steigert die Qualität des Zuführabschnitts und trägt dadurch zur Güte und Festigkeit der gesamten Kühlbohrung bei.

Für den Zuführabschnitt wird in Schritt A bevorzugt ein elliptischer, besonders bevorzugt kreisförmiger Querschnitt gewählt. Der Querschnitt des Zuführabschnitts wird dabei senkrecht zur Achse der Kühlbohrung genommen.

Die Achse des Zuführabschnitts schneidet die äußere Oberfläche vorteilhaft unter einem Winkel α < 90° und definiert dadurch eine Kipprichtung der Kühlbohrung. Die Filmkühleffektivität der Kühlbohrung läßt sich dadurch steigern, daß die Austrittsfläche des Diffusorabschnitts so gewählt wird, daß sich der Diffusorabschnitt zur äußeren Oberfläche der Wand hin zumindest in Kipprichtung der Achse aufweitet. Die der Kipprichtung abgewandte Begrenzungsfläche des Diffusorabschnitts wird mit Vorteil zur Achse hin abgerundet, insbesondere elliptisch abgerundet gewählt. Dadurch erhöht sich einerseits die Stabilität der Kühlbohrung gegen äußere Einwirkungen, andererseits führt die Ausrundung zu einer weiteren signifikanten Verringerung der Verletzungen des Zuführabschnitts beim Ausschneiden des Diffusorteils.

Die in Kipprichtung liegende Auslaßkante des Diffusorabschnitts wird zweckmäßig so gewählt, daß sie im wesentlichen gerade ist und an ihren Enden in einer glatten Kurve in die Seitenkanten des Auslasses übergeht. Besonders zweckmäßig ist es, für den Zuführabschnitt einen kreisförmiger Querschnitt mit Radius *R* zu wählen und die in Kipprichtung liegende Auslaßkante des Diffusorabschnitts so zu wählen, daß sie in die Seitenkanten des Auslasses mit einem Krümmungsradius größer als *R* übergeht.

Eine weitere Steigerung der Kühleffektivität läßt sich erreichen, wenn die Austrittsfläche des Diffusorabschnitts so gewählt wird, daß sich der Diffusorabschnitt zur äußeren Oberfläche der Wand hin seitlich aufweitet.

Vorteilhaft wird die äußere Oberfläche der Wand vor dem Erzeugen der Durchgangsbohrung im Schritt C zumindest teilweise mit einer Schutzschicht, insbesondere einer keramischen Schutzschicht überzogen.

Die erfindungsgemäße nichtkreisförmige Kühlbohrung in einer Wand eines Werkstücks umfaßt einen Zuführabschnitt mit konstanter Querschnittsfläche und einen Diffusorabschnitt, der sich zu einem Auslaß an einer ersten Oberfläche der Wand hin aufweitet. Dabei umfaßt der Zuführabschnitt einen in eine zweite Oberfläche der Wand austretenden Eingangsabschnitt und einen an den Diffusorabschnitt angrenzenden Zuleitungsabschnitt, wobei die Länge des Eingangsabschnitts an der Achse höchstens 40% der Länge des Zuführabschnitts beträgt. Weiter sind die Begrenzungsflächen des Diffusorabschnitts in Strömungsrichtung der Kühlbohrung gerade und die Tangenten an die Begrenzungsflächen durch die Achse verlaufen im Inneren des Zuleitungsabschnitts und schneiden den Zuführabschnitt höchstens in dem Eingangsabschnitt.

Eine solche nichtkreisförmige Kühlbohrung kann aufgrund ihrer Auslegung leicht mit einem Laserbohrverfahren hergestellt werden. Die relativen Größen des Eingangsabschnitts und des Zuleitungsabschnitts stellen sicher, daß der Zuführabschnitt nicht durch den Laserstrahl nicht zu stark verletzt wird. Die Bedingung an die Tangenten an die Begrenzungsflächen bewirkt, daß bei geeigneter Strahlführung ein gerader Laserstrahl den Zuführabschnitt beim Ausschneiden des Diffusors höchstens im Bereich des Eingangsabschnitts verletzt, ansonsten aber ohne einen Teil der Bauteilwand zu treffen, durch die Öffnung in der zweiten Oberfläche geht.

Zweckmäßig schneidet die Achse der Kühlbohrung die erste Oberfläche der Wand unter einem Winkel zwischen 10° und 60°, bevorzugt unter einem Winkel zwischen 15° und 50°, besonders bevorzugt unter einem Winkel zwischen 25° und 35°. Die Kühleffektivität der Kühlbohrung läßt sich weiter steigern wenn sich der Diffusorabschnitt zur ersten Oberfläche der Wand hin zumindest in Kipprichtung der Achse aufweitet oder wenn er sich zur ersten Oberfläche der Wand hin seitlich aufweitet. Besonders deutlich läßt sich die Effektivität steigern, wenn seitliche und stromabwärtige Aufweitung kombiniert werden.

Mit Vorteil ist die der Kipprichtung abgewandte Begrenzungsfläche des Diffusorabschnitts zur Achse hin gerundet, bevorzugt elliptisch gerundet. Dadurch erhöht sich einerseits die Stabilität der Kühlbohrung gegen äußere Einwirkungen, andererseits führt die Ausrundung zu einer weiteren signifikanten Verringerung der Verletzungen des Zuführabschnitts beim Ausschneiden des Diffusorteils. Die der Kipprichtung zugewandte Begrenzungsfläche des Diffusorabschnitts ist bevorzugt im wesentlichen eben und geht in einer glatten Kurve in die Seitenflächen über.

Der Zuführabschnitt weist bevorzugt einen kreisförmigen Querschnitt mit Radius *R* auf. Die Länge des Zuführabschnitts ist dann zweckmäßig so gewählt, daß sie seiner kürzesten Begrenzungsfläche mindestens *2R* beträgt. Dadurch ist ein wohldefinierter zylinderförmiger Öffnungsbereich festgelegt, durch den die im Betrieb einströmende Kühlmittelmenge bestimmt ist.

In einer Ausgestaltung der Erfindung ist die erste Oberfläche der Wand zumindest teilweise mit einer Schutzschicht, insbesondere einer keramischen Schutzschicht überzogen. In einer weiteren Ausgestaltung ist die Wand die äußere Wand eines Hohlprofilkörpers, insbesondere einer Gasturbinenschaufel.

Die Erfindung soll nachfolgend anhand von Ausführungsbeispielen im Zusammenhang mit den Zeichnungen näher erläutert werden. Es zeigen
- Fig. 1: einen Querschnitt durch eine Wand mit einer erfindungsgemäßen Kühlbohrung;
- Fig. 2: eine Teilansicht der Wand in Richtung 2-2 von Fig. 1;
- Fig. 3: eine perspektivische Ansicht einer erfindungsgemäßen Kühlbohrung;
- Fig. 4: eine schematische Darstellung, die das Ausschneiden einer Kühlbohrung mit einem Laserstrahl entsprechend einem Ausführungsbeispiel der Erfindung illustriert;
- Fig. 5: einen Unteransicht einer Wand in Richtung 5-5 von Fig. 1;
- Fig. 6: eine perspektivische Teilseitenansicht der Wand von Fig. 5;

Es sind nur die für das Verständnis der Erfindung wesentlichen Elemente gezeigt. Nicht gezeigt ist beispielsweise der vollständige Hohlprofilkörper der Turbinenschaufel und die gesamte Anordnung der Kühlbohrungen. Die Strömungsrichtung des Arbeitsmittels ist mit Pfeilen bezeichnet. Übereinstimmende Elemente sind in allen Figuren mit demselben Bezugszeichen bezeichnet.

### Wege zur Ausführung der Erfindung

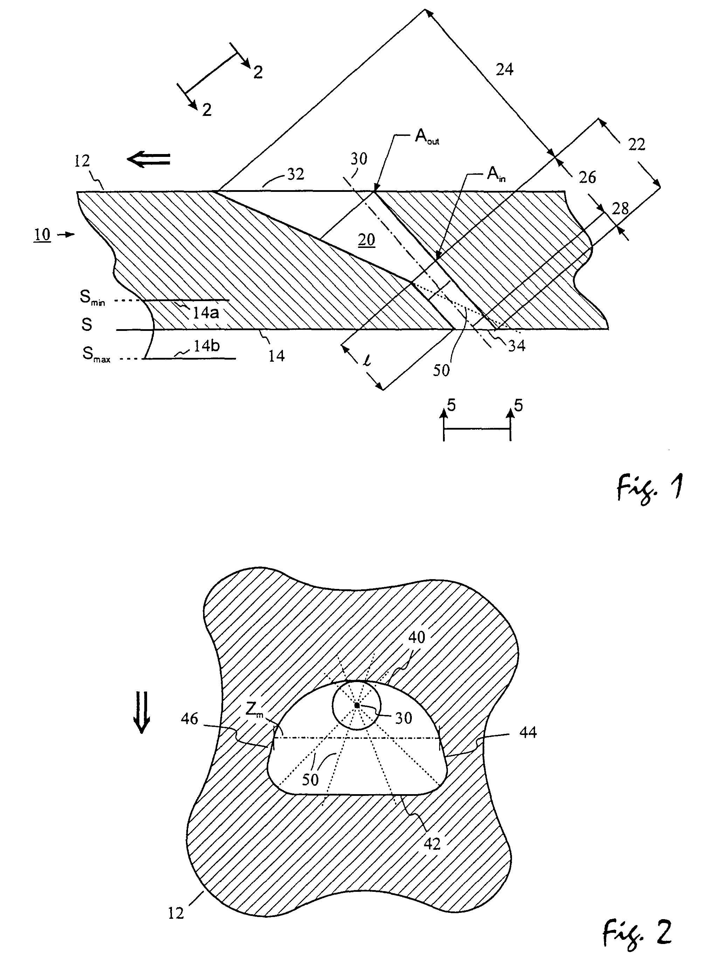

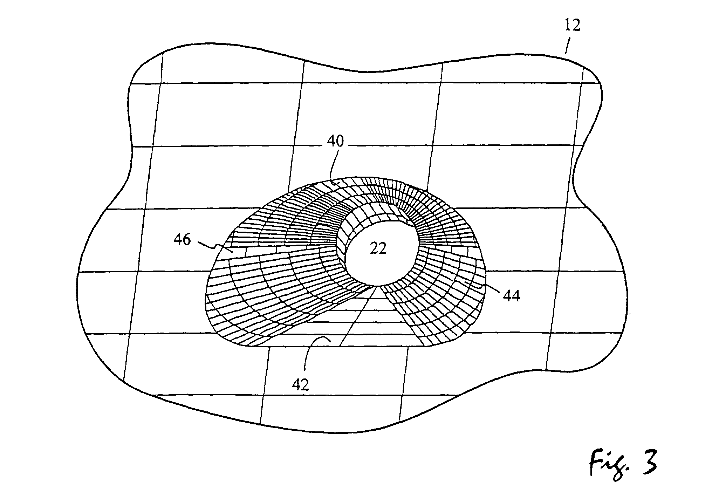

Ein Ausführungsbeispiel der Erfindung wird mit Bezug auf die in den Figuren 1 bis 3 gezeigten Kühlbohrung erläutert. Die Kühlbohrung 20 in einer Wand 10 erstreckt sich von einer inneren Oberfläche 14 zu einer äußeren Oberfläche 12. An der äußeren Oberfläche 12 strömt in der Einsatzumgebung der Wand 10 ein Heißgasstrom entlang. Die innere Oberfläche 14 ist Begrenzungsfläche einer Kühlmittelkammer, die unter Druck stehende Kühlluft enthält. Auf der Kühlkammerseite weist die Kühlbohrung 20 einen zylindrischen Zuführabschnitt 22 auf, dessen Querschnitt am Einlaß 34 die durchströmende Kühlluftmenge bestimmt. Der Diffusorabschnitt 24 weitet sich vom Zuführabschnitt 22 zu dem Auslaß 32 an der äußeren Oberfläche 12 hin auf. Wie am besten in Fig. 2 zu sehen, erfolgt die Aufweitung nicht nur seitlich, sondern auch stromab. Figur 3 zeigt eine perspektivische Ansicht der Kühlbohrung 20.

Das mit Kühlbohrungen zu versehende Bauteil hat eine Sollwandstärke Sₛₒₗₗ. Wie in Figur 1 schematisch angedeutet, wird bei der Herstellung der Wand eine Wandstärke zwischen Sₘᵢₙ (Bezugszeichen 14a) und Sₘₐₓ (Bezugszeichen 14b) zugelassen, die tatsächliche Wandstärke S (Bezugszeichen 14) liegt also zwischen Sₘᵢₙ und Sₘₐₓ.

Der Zuführabschnitt 22 weist senkrecht zu seiner Achse 30 einen kreisförmigen Querschnitt mit Durchmesser *d* auf. Die Länge / des Zuführabschnitts 22 ist so gewählt, daß sie bei der minimalen Wandstärke von Sₘᵢₙ noch seinem Durchmesser entspricht, also mindestens *d* beträgt. Ist die Wandstärke größer als Sₘᵢₙ, wird der Zuführabschnitt entsprechend länger. Durch die Variation der Wandstärke ändert sich also der Zuführabschnitt 22, nicht jedoch der Diffusorabschnitt 24. Durch diese Auslegung ist unabhängig von den Herstellungstoleranzen bei jeder Wanddicke ein gute definierter Kühlluftöffnung gewährleistet.

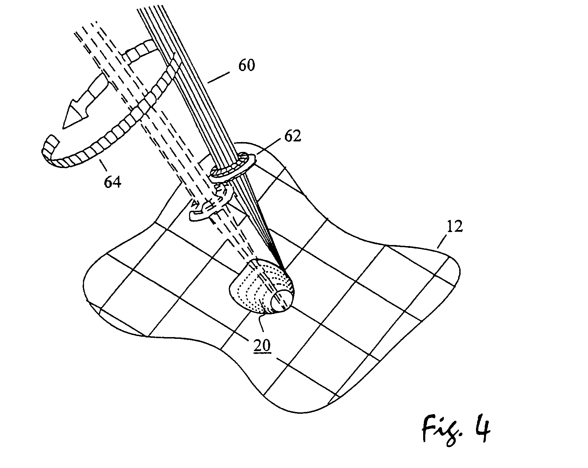

Die Begrenzungsflächen 40-46 des Diffusorabschnitts 24 weisen in Strömungsrichtung des Kühlmediums, also entlang der Achse 30 keine Krümmung auf. Dadurch ist es möglich, diese Flächen durch einen geraden Laserstrahl von der äußeren Oberfläche 12 her auszuschneiden (Fig. 4). Wie in Figuren 2 und 3 zu sehen, weisen die Begrenzungsflächen jedoch senkrecht zu der Achse 30 ausgeprägte Ausrundungen auf. Die stromaufwärtige Begrenzungsfläche 40 ist in diesem Ausführungsbeispiel elliptisch zur Achse 30 hin gerundet. Sie geht in einer glatten Kurve in die Seitenflächen 44, 46 über. Die stromabwärtige Begrenzungsfläche 42 des Diffusors ist im wesentlichen eben und geht mit einem Krümmungsradius R₂ glatt in die Seitenflächen 44,46 über. Dabei ist R₂ größer gewählt als der Radius des zylindrischen Abschnitts R=d/2. Im Ausführungsbeispiel ist R₂ um 50% größer als der Radius des Zylinderabschnitts 22.

Diese Maßnahmen führen dazu, daß die Tangenten 50 an die Begrenzungsflächen 40-46 durch die Achse 30 den zylindrischen Zuführabschnitt höchstens in einem kleinen Eingangsabschnitt 28 schneiden. Der Zuleitungsabschnitt 26 wird von den Tangenten nicht getroffen. Eine solche Kühlbohrung kann somit sehr gut mit einem Laserstrahl ausgeschnitten werden, da der Laserstrahl wie die Tangenten 50 den Zuführabschnitt 22 beim Ausschneiden höchstens in dem Eingangsabschnitt 28 verletzt. In der Regel geht der Laserstrahl ohne Schaden zu verursachen durch die Öffnung 34 des Zuführabschnitts.

Ein erfindungsgemäßes Herstellungsverfahren einer Kühlbohrung wie in Figuren 1 bis 3 gezeigt, wird im folgenden beschrieben: In einem ersten Schritt wird die Gestalt des Lochs festgelegt. Dabei gehen Sollwandstärke und erlaubte Toleranz der Wandstärke mit ein. Festgelegt werden der Durchmesser des zylindrischen Zuführabschnitts, seine Mindestlänge gemessen an seiner stromabwärtigen Kante und der Winkel den die Lochachse mit der äußeren Oberfläche einschließt. Beim Diffusorabschnitt werden Form und Größe der Austrittsfläche festgelegt, insbesondere die Halbmesser der elliptischen Ausrundung an der stromaufwärtigen Seite und die Krümmungsradien, mit der die stromabwärtige Kante in die Seitenflächen übergeht. Aus der minimal erlaubten Wandstärke Sₘᵢₙ und der Mindestlänge des zylindrischen Abschnitts ergibt sich die Tiefe des Diffusorabschnitts.

Diese Werte werden für die unterschiedlichen Sollwandstärken so festgelegt, daß sich die aerodynamischen Parameter der Kühlbohrungen und damit die Kühleffektivität nicht verändern. Dies geschieht dadurch, daß das Öffnungsverhältnis Aᵣ, die mittlere Lochbreite Zₘ und die Bedeckung Zₘ/P konstant gehalten werden. Dabei ist das Öffnungsverhältnis Aᵣ das Verhältnis der Diffusoraustrittsfläche Aₒᵤₜ zur zylindrischen Eintrittsfläche Aᵢₙ, gemessen jeweils senkrecht zur Lochachse. Die Bedeckung ergibt sich als Verhältnis der mittleren Lochbreite Zₘ zum Abstand der Kühlbohrungen P.

In einem nächsten Schritt wird in die Wand ein Durchgangsloch gebohrt, das einen etwas kleineren Durchmesser als der zylindrische Zuführabschnitt aufweist. Anschließend wird mit dem Laserstrahl mit einer der jeweiligen Bohrtiefe angepaßten Schnittgeschwindigkeit der Diffusorabschnitt ausgeschnitten (Fig. 4). Dabei wird der Laserstahl 60 mit einer Linse 62 fokussiert, und entlang der auszuschneidenden Kontur geführt (Bezugszeichen 64). Zuletzt wird der zylindrische Abschnitt auf die Endkontur ausgeschnitten. Die Steuerung des Laserstrahls erfolgt über eine CAD/CAM Schnittstelle mit einer üblichen CNC Maschine.

Das beschriebene Verfahren kann sowohl für unbeschichtete als auch für metallisch oder keramisch beschichtete Bauteilwände angewandt werden.

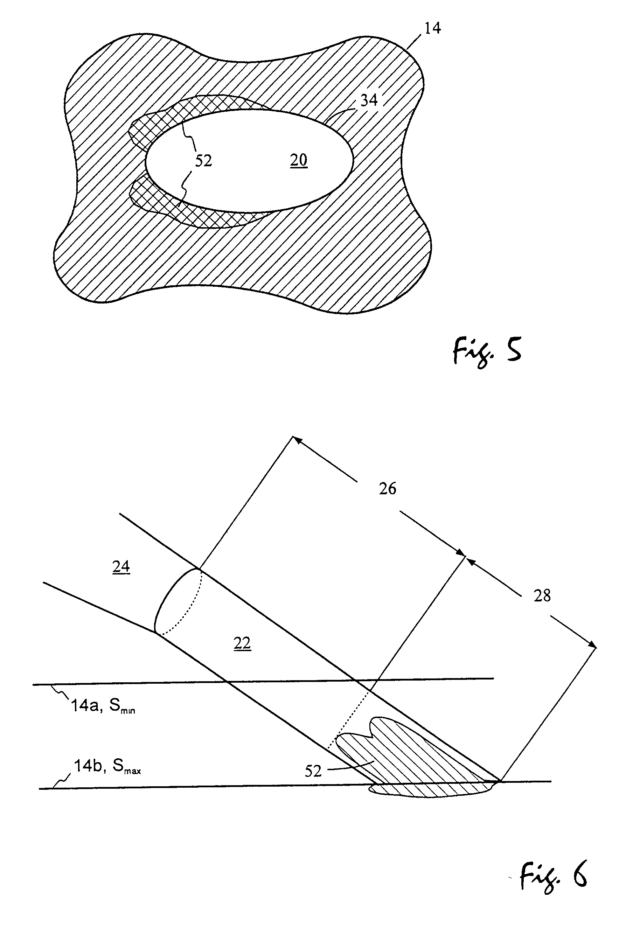

Figur 5 zeigt in Unteransicht den kühlkammerseitigen Auslaß 34 einer Kühlbohrung 20. Die Bereiche 52 am Rand der Öffnung 34 wurden durch den Laserbohrprozess zusätzlich ausgeschnitten. Durch die erfindungsgemäße Ausgestaltung des Diffusorabschnitts sind diese Bereiche klein gehalten.

In Figur 6 ist der untere Bereich einer Kühlbohrung in perspektivischer Seitenansicht gezeigt. Die mit den Bezugszeichen 14a (Sₘᵢₙ)und 14b (Sₘₐₓ) bezeichneten Linien geben den Bereich der durch die zulässige Toleranz der Wandstärke möglichen Positionen der inneren Oberfläche an. Bei einer Wandstärke von Sₘₐₓ ist der verletzte Bereich 52 am größten. Bei einer Wandstärke Sₘᵢₙ treten keine Verletzungen auf. Figur 6 zeigt, daß es aus Kostengründen vorteilhaft ist, ein gewisses Maß an Verletzungen zu tolerieren, da bei einer Forderung nach völliger Verletzungsfreiheit des Zuführabschnitts die zulässige Wandstärkentoleranz sehr klein wird.

### Bezugszeichenliste

- 10: Wand
- 12: äußere Oberfläche
- 14,14a,14b: innere Oberfläche
- 20: Filmkühlloch
- 22: Zuführabschnitt
- 24: Diffusorabschnitt
- 26: Zuleitungsabschnitt
- 28: Eingangsabschnitt
- 30: Achse des Filmkühllochs
- 32: Auslaß des Diffusorabschnitts
- 34: Einlaß des Zuführabschnitts
- 40: stromaufwärtige Begrenzungsfläche
- 42: stromabwärtige Begrenzungsfläche
- 44,46: Seitenflächen des Diffusorabschnitts
- 50: Tangenten an die Begrenzungsflächen
- 52: verletzte Bereiche
- 60: Laserstrahl
- 62: Linse
- 64: auszuschneidende Kontur

## Patentansprüche

1. Verfahren zum Ausbilden einer Kühlbohrung mit Hilfe eines Strahlbohrverfahrens in einer Wand eines Werkstücks, wobei die Kühlbohrung in Strömungsreihenfolge einen Zuführabschnitt mit konstanter Querschnittsfläche und einen sich zu einem Auslass an einer äusseren Oberfläche der Wand hin aufweitenden Diffusorabschnitt aufweist, umfassend folgende verfahrensschritte:
A) Auswählen von Form und Grösse der Querschnittsfläche und einer Achse des Zuführabschnitts;
B) Auswählen der Tiefe des Diffusorabschnitts und der Form und Grösse seiner Austrittsfläche an dem Auslass;
C) Erzeugen einer Durchgangsbohrung mit einer Querschnittsfläche, die innerhalb der im Schritt A ausgewählten Querschnittsfläche des Zuführabschnitts liegt;
D) Ausschneiden des Diffusorabschnitts mit einem Strahlbohrverfahren, **dadurch gekennzeichnet, daß** der Bohrstrahl relativ zum Werkstück entlang der auszuschneidenden Kontur so geführt wird, dass er im Bereich des Zuführabschnitts im wesentlichen innerhalb der in Schritt A ausgewählten Querschnittsfläche bleibt.

2. Verfahren nach Anspruch 1, **dadurch gekennzeichnet, dass** im Schritt D als Strahlbohrverfahren ein Laserbohrverfahren, insbesondere ein gepulstes Laserbohrverfahren, eingesetzt wird.

3. Verfahren nach Anspruch 1, **dadurch gekennzeichnet, dass** im Schritt D der Diffusorabschnitt gerade ausgeschnitten wird, so dass die Begrenzungsflächen des Diffusorabschnitts in Strömungsrichtung der Kühlbohrung keine Krümmung aufweisen.

4. Verfahren nach Anspruch 1, **dadurch gekennzeichnet, dass** in einem Schritt E der Zuführabschnitt auf Endkontur ausgeschnitten wird.

5. Verfahren nach Anspruch 1, **dadurch gekennzeichnet, dass** im Schritt A ein elliptischer, insbesondere kreisförmiger Querschnitt gewählt wird.

6. Verfahren nach Anspruch 1, **dadurch gekennzeichnet, dass** im Schritt A die Achse so gewählt wird, dass sie die Oberfläche der Wand unter einem Winkel kleiner 90° schneidet.

7. Verfahren nach Anspruch 6, **dadurch gekennzeichnet, dass** im Schritt B die Austrittsfläche des Diffusorabschnitts so gewählt wird, dass sich der Diffusorabschnitt zur äusseren Oberfläche der Wand hin zumindest in Kipprichtung der Achse aufweitet.

8. Verfahren nach Anspruch 7, **dadurch gekennzeichnet, dass** im Schritt B die Austrittsfläche des Diffusorabschnitts so gewählt wird, dass die der Kipprichtung abgewandte Begrenzungsfläche des Diffusorabschnitts zur Achse hin abgerundet, insbesondere elliptisch abgerundet ist.

9. Verfahren nach Anspruch 7 oder 8, **dadurch gekennzeichnet, dass** im Schritt B die Austrittsfläche des Diffusorabschnitts so gewählt wird, dass die in Kipprichtung liegende Auslasskante des Diffusorabschnitts im wesentlichen gerade ist und an ihren Enden in einer glatten Kurve in die Seitenkanten des Auslasses übergeht.

10. Verfahren nach Anspruch 9, **dadurch gekennzeichnet, dass** im Schritt A für den Zuführabschnitt ein kreisförmiger Querschnitt mit Radius R gewählt wird und im Schritt B die in Kipprichtung liegende Auslasskante des Diffusorabschnitts so gewählt wird, dass sie in die Seitenkanten des Auslasses mit einem Krümmungsradius grösser als R übergeht.

11. Verfahren nach Anspruch 1, **dadurch gekennzeichnet, dass** im Schritt B die Austrittsfläche des Diffusorabschnitts so gewählt wird, dass sich der Diffusorabschnitt zur äusseren Oberfläche der Wand hin seitlich aufweitet.

12. Verfahren nach Anspruch 1, **dadurch gekennzeichnet, dass** die äussere Oberfläche der Wand vor dem Schritt C zumindest teilweise mit einer Schutzschicht, insbesondere einer keramischen Schutzschicht überzogen wird.

## Claims

1. Method for forming a cooling bore with the aid of a beam- or jet-drilling method in a wall of a workpiece, the cooling bore, in the flow sequence, having a feed section of constant cross-sectional area and a diffuser section widening towards an outlet at an outer surface of the wall, comprising the following steps:
A) Selecting the shape and size of the cross-sectional area and an axis of the feed section;
B) Selecting the depth of the diffuser section and the shape and size of its discharge area at the outlet;
C) Producing a throughbore having a cross-sectional area which lies within the cross-sectional area, selected in step A, of the feed section;
D) Cutting out the diffuser section with a beam- or jet-drilling method, **characterized in that** the drilling beam or jet is directed relative to the workpiece along the contour to be cut out in such a way that, in the region of the feed section, it remains essentially within the cross-sectional area selected in step A.

2. Method according to Claim 1, **characterized in that** the beam- or jet-drilling method used in step D is a laser-drilling method, in particular a pulsed laser-drilling method.

3. Method according to Claim 1, **characterized in that** the diffuser section is cut straight in step D, so that the boundary surfaces of the diffuser section have no curvature in the direction of flow of the cooling bore.

4. Method according to Claim 1, **characterized in that** the feed section is cut out to the final contour in a step E.

5. Method according to Claim 1, **characterized in that** an elliptical, in particular circular, cross section is selected in step A.

6. Method according to Claim 1, **characterized in that**, in step A, the axis is selected in such a way that it intersects the surface of the wall at an angle of less than 90°.

7. Method according to Claim 6, **characterized in that**, in step B, the discharge area of the diffuser section is selected in such a way that the diffuser section widens towards the outer surface of the wall at least in the direction of tilt of the axis.

8. Method according to Claim 7, **characterized in that**, in step B, the discharge area of the diffuser section is selected in such a way that that boundary surface of the diffuser section which lies in the opposite direction to the direction of tilt is rounded off towards the axis, in particular elliptically.

9. Method according to Claim 7 or 8, **characterized in that**, in step B, the discharge area of the diffuser section is selected in such a way that that outlet edge of the diffuser section which lies in the direction of tilt is essentially straight and merges at its ends in a smooth curve into the side edges of the outlet.

10. Method according to Claim 9, **characterized in that**, in step A, a circular cross section of radius R is selected for the feed section, and, in step B, that outlet edge of the diffuser section which lies in the direction of tilt is selected in such a way that it merges into the side edges of the outlet with a radius of curvature greater than R.

11. Method according to Claim 1, **characterized in that**, in step B, the discharge area of the diffuser section is selected in such a way that the diffuser section widens laterally towards the outer surface of the wall.

12. Method according to Claim 1, **characterized in that** the outer surface of the wall, before step C, is covered at least partly with a protective coating, in particular a ceramic protective coating.

## Revendications

1. Procédé de formation d'un alésage de refroidissement dans une pièce à l'aide d'un procédé de forage par faisceau, l'alésage de refroidissement présentant successivement dans le sens de l'écoulement une partie d'amenée à section transversale de surface constante et une partie formant diffuseur qui s'évase en direction d'une sortie située sur une surface extérieure de la paroi, comprenant les étapes de procédé suivantes :
A) sélection de la forme et de la taille de la section transversale et d'un axe de la partie d'amenée ;
B) sélection de la profondeur de la partie formant un diffuseur et de la forme de la taille de sa surface de sortie à la sortie ;
C) création d'un alésage de passage dont la surface de la section transversale est située à l'intérieur de la section transversale de la partie d'amenée sélectionnée à l'étape A ;
D) découpe de la partie formant diffuseur par un procédé de forage par faisceau, le faisceau de forage étant guidé par rapport à la pièce le long du contour à découper de telle sorte que dans la région de la partie d'amenée, il reste essentiellement à l'intérieur de la section transversale sélectionnée à l'étape A.

2. Procédé selon la revendication 1, **caractérisé en ce que** dans l'étape D, on utilise comme procédé de forage par faisceau un procédé de forage par laser, en particulier un procédé de forage par laser pulsé.

3. Procédé selon la revendication 1, **caractérisé en ce que** au cours de l'étape D, la partie formant diffuseur est découpée droite de sorte que les surfaces limites de la partie formant diffuseur ne présentent pas de courbure dans la direction d'écoulement dans l'alésage de refroidissement.

4. Procédé selon la revendication 1, **caractérisé en ce que** dans une étape E, la partie d'amenée est découpée à son contour final.

5. Procédé selon la revendication 1, **caractérisé en ce qu'**à l'étape A, on sélectionne une section transversale elliptique, en particulier circulaire.

6. Procédé selon la revendication 1, **caractérisé en ce qu'**à l'étape A, l'axe est sélectionné de telle sorte qu'il coupe la surface de la paroi sous un angle inférieur à 90°.

7. Procédé selon la revendication 6, **caractérisé en ce qu'**à l'étape B, la surface de sortie de la partie formant diffuseur est sélectionnée de telle sorte que la partie formant diffuseur s'évase en direction de la surface extérieure de la paroi, au moins dans la direction d'inclinaison de l'axe.

8. Procédé selon la revendication 7, **caractérisé en ce qu'**à l'étape B, la surface de sortie de la partie formant diffuseur est sélectionnée de telle sorte que la surface limite de la partie formant diffuseur non tournée dans la direction de l'axe est arrondie en direction de l'axe, et en particulier arrondie en forme elliptique.

9. Procédé selon la revendication 7 ou 8, **caractérisé en ce qu'**à l'étape B, la surface de sortie de la partie formant diffuseur est sélectionnée de telle sorte que le bord de sortie situé dans la direction de l'inclinaison de la partie formant diffuseur est essentiellement rectiligne, et **en ce qu'**à ses extrémités, il se prolonge en une courbe lisse en les côtés latéraux de la sortie.

10. Procédé selon la revendication 9, **caractérisé en ce qu'**à l'étape A, on sélectionne pour la partie d'amenée une section transversale circulaire d'un rayon R, et **en ce qu'**à l'étape B, le bord de sortie située dans la direction d'inclinaison de la partie formant diffuseur est sélectionné de telle sorte qu'il se prolonge en les côtés latéraux de la sortie, par un rayon de courbure supérieur à R.

11. Procédé selon la revendication 1, **caractérisé en ce qu'**à l'étape B, la surface de sortie de la partie formant diffuseur est sélectionnée de telle sorte que la partie formant diffuseur s'évase latéralement en direction de la surface extérieure de la paroi.

12. Procédé selon la revendication 1, **caractérisé en ce que** la surface extérieure de la paroi est recouverte au moins en partie d'une couche de protection, en particulier d'une couche de protection en céramique, avant l'étape C.
